# EUROPEAN PATENT APPLICATION

(11) **EP 3 506 495 A1**
(43) Date of publication of application: **03.07.2019**
(21) Application number: 18186689.8
(22) Date of filing: 31.07.2018
(51) Int. Cl.: H02S 50/10

(54) **METHOD AND SYSTEM FOR TESTING WEATHER RESISTANCE OF PHOTOVOLTAIC MODULE**

(30) Priority: 26.12.2017 CN 201711440811
(71) Applicant: Miasole Photovoltaic Technology Co., Ltd., Beijing (CN)
(72) Inventor: SUN, Junbo, BEIJING (CN); YANG, Sheng, BEIJING (CN); AO, Huaming, BEIJING (CN)
(74) Representative: Cabinet Beau de Loménie

(57) **Abstract**

The present disclosure relates to a method and system for testing weather resistance of a photovoltaic module. The method includes sequential steps of: according to a predetermined appearance inspection standard, performing an appearance defect inspection on the photovoltaic module; testing a light attenuation rate of the photovoltaic module, and when the light attenuation rate is smaller than a predetermined attenuation threshold, under a predetermined test condition, checking an output power of the photovoltaic module; simulating a climate environment, and performing an environmental weather resistance test on the photovoltaic module; according to the appearance inspection standard, performing an appearance defect inspection on the photovoltaic module; testing the light attenuation rate of the photovoltaic module, and when the light attenuation rate is smaller than the attenuation threshold, checking the output power of the photovoltaic module under the predetermined test condition; and ending testing of weather resistance.

## Description

### TECHNICAL FIELD

The present disclosure relates to the photovoltaic power supply technology for shared bikes, and in particular, to a method and system for testing weather resistance of a photovoltaic module.

### BACKGROUND

Shared bike is a product of sharing economies that have emerged in recent years. Because of the advantages such as convenience, environment friendliness, and low prices, the shared bikes have quickly won the favor of consumers. At the same time, the shared bikes have driven the rapid development of the mobile energy industry.

Photovoltaic modules used for shared bikes are integrated into bodies of the shared bikes (usually placed in a basket), and the bike batteries of the shared bikes are charged through sunlight to meet the power demands of various types of electrical equipment, for example, "smart locks" of the shared bikes, thereby improving the efficiency in energy production, recycling, and sharing for the shared bikes. The photovoltaic modules refer to devices that use solar energy to generate electricity, and usually include crystalline silicon photovoltaic modules and thin film photovoltaic modules.

However, at present, there are no test and analysis methods and standards for testing the performance and lifetime of the photovoltaic modules used in shared bikes, for example, testing processes and determination criteria of the weather resistance of photovoltaic modules used on the shared bikes.

### SUMMARY

An objective of the present disclosure is, aiming at the performance and lifetime of photovoltaic modules used on shared bikes, to provide a method and system for testing weather resistance of a photovoltaic module, so as to make up for the absence of a method for testing photovoltaic modules used on shared bikes.

The technical solutions of the present disclosure are as follows.

There is provided a method for testing weather resistance of a photovoltaic module, including sequential steps of:
step S1, according to a predetermined appearance inspection standard, performing an appearance defect inspection on the photovoltaic module;
step S2, testing a light attenuation rate of the photovoltaic module, and when the light attenuation rate is smaller than a predetermined attenuation threshold, performing step S3;
step S3, under a predetermined test condition, checking an output power of the photovoltaic module;
step S4, simulating a climate environment, and performing an environmental weather resistance test on the photovoltaic module;
step S5, according to the appearance inspection standard, performing an appearance defect inspection on the photovoltaic module;
step S6, testing the light attenuation rate of the photovoltaic module, and when the light attenuation rate is smaller than the attenuation threshold, performing step S7;
step S7, checking the output power of the photovoltaic module under the predetermined test condition; and
step S8, ending testing of weather resistance.

The environmental weather resistance test may include any one or a combination of a humid-hot resistance test, a humid-freezing resistance test, or a heat cycle resistance test.

The humid-hot resistance resistance test may include:
placing the photovoltaic module in an environment with an ambient temperature of 60° C to 70° C and a relative humidity of 80% to 90% for a first predetermined time.

The humid-freezing resistance test may include:
placing the photovoltaic module in an environment with an ambient temperature of -30°C to 60°C and a relative humidity of 80% to 90% for a second predetermined time.

The heat cycle resistance test may include:
placing the photovoltaic module in an environment with an ambient temperature of -30°C to 60°C and changing the ambient temperature according to a predetermined test cycle.

After checking the output power of the photovoltaic module, the method may further include:
performing an internal structure inspection on the photovoltaic module.

The testing the light attenuation rate of the photovoltaic module may include:
simulating solar radiation, and allowing the photovoltaic module to continuously experience the simulated radiation according to a predetermined radiation energy and a predetermined number of times.

There is further provided a system for testing weather resistance of a photovoltaic module, including a module appearance inspection device, a light attenuation rate test device, a power check device, an environment simulation device, a controller and a carrier unit;
wherein:
the module appearance inspection device is configured to perform an appearance defect inspection on the photovoltaic module;
the light attenuation rate test device is configured to test a light attenuation rate of the photovoltaic module;
the power check device is configured to check an output power of the photovoltaic module;
the environment simulation device is configured to simulate a climate environment;
the controller is configured to control the carrier unit to carry the photovoltaic module to the above devices according to the sequence of the steps in the above method for testing weather resistance of the photovoltaic module.

The system for testing weather resistance may further include an infrared imaging device configured to perform an internal structure inspection on the photovoltaic module.

The light attenuation rate test device may include a light absorption test chamber.

In the exemplary embodiments of the present disclosure, for the photovoltaic modules used on shared bikes, simulation experiments (or tests) based on actual climate environments are performed, and according to a particular test sequence, the performance of the photovoltaic modules before and after the experiments are tested in order. Embodiments of the present disclosure can provide reliable analysis basis and determination criteria for usage performance, lifetime and expiry period of photovoltaic modules under different climate environments. Meanwhile, embodiments of the present disclosure also provide support for analysis data for technology upgrading in this industry. The present disclosure can not only make up for the absence of the testing procedure for the photovoltaic modules used on shared bikes, but also can provide forceful technical guarantee for users of shared bikes under different climate environments.

### BRIEF DESCRIPTION OF THE DRAWINGS

Objectives, technical solutions, and advantages of the present disclosure will become apparent from the following description of the present disclosure with reference to drawings, in which:
Fig. 1 is a flow chart of a method for testing weather resistance of a photovoltaic module according to an embodiment of the present disclosure.
Fig. 2 is a flow chart of another method for testing weather resistance of a photovoltaic module according to an embodiment of the present disclosure.

### DETAILED DESCRIPTION

Embodiments of the present disclosure are described in detail below, and exemplary embodiments are shown in the accompanying drawings, in which the same or similar reference numbers denote the same or similar elements or elements having the same or similar functions throughout. The embodiments described below with reference to the drawings are exemplary, are used to explain the present disclosure only, and cannot be construed as limiting the present disclosure.

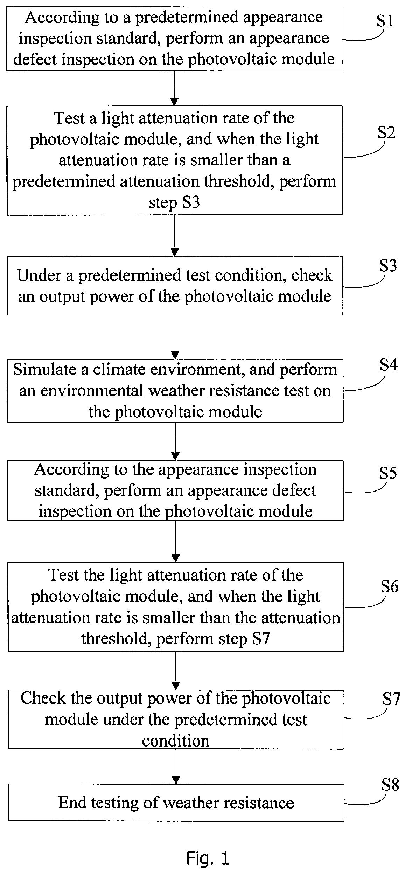

An embodiment of the present disclosure provides a method for testing weather resistance of a photovoltaic module. As shown in Fig. 1, the method includes the following steps in sequence:
In step S1, according to a predetermined appearance inspection standard, an appearance defect inspection is performed on the photovoltaic module.

First of all, before the weather resistance test, the module to be tested is visually inspected. The basis of the inspection criteria may be an appearance inspection specification customized for photovoltaic products for shared bikes. The purpose is to check whether the appearance of the photovoltaic module is obviously defective or there is any defect in the appearance of the photovoltaic module which goes beyond the appearance inspection specification. The photovoltaic module used in shared bikes described herein may include photovoltaic modules of types such as the crystalline silicon, thin film, and the like.

In step S2, a light attenuation rate of the photovoltaic module is tested, and when the light attenuation rate is smaller than a predetermined attenuation threshold, step S3 is performed.

Next, a light attenuation rate test of the photovoltaic module is performed. Since this step is before the weather resistance test, those skilled in the art may understand that this step is an initial light attenuation rate test which is performed to determine whether the photovoltaic module product meets the reliability as required in the shared bike application field. Thus, the attenuation threshold may be set to be a relatively small value, for example, 1%. That is, the subsequent steps may be performed only if the light attenuation rate is smaller than 1%. The so-called light attenuation refers to that the output power of the photovoltaic module experiences a significant decrease during the first few days of the first use. In actual operations, the light attenuation may be reduced by replacing the boron element with the gallium element, or pre-lighting on the photovoltaic module may be performed to control the initial light attenuation of the photovoltaic module within a very small range, thereby increasing the output stability of the photovoltaic module. Therefore, in an exemplary embodiment of the present disclosure, when performing the light attenuation rate test on the photovoltaic module, solar radiation may be simulated, and the photovoltaic module is continuously irradiated according to predetermined radiation energy and a predetermined number of times. The predetermined radiation energy may be 20Kwh, and the predetermined number of times may be at least twice.

In step S3, under a predetermined test condition, an output power of the photovoltaic module is checked.

For a photovoltaic module that meets the output stability as required for a shared bike, the output power check is a double-check method proposed by the present disclosure. Here, the predetermined test condition refers to a power check according to any of the established standards, such as national standards, international standards or industrial standards. For example, the output power may be checked by referring to the STC test standard. The reason for the double-check is as follows: after the aforementioned light attenuation step, the output power of the photovoltaic module may be abnormal due to placing or carrying of the photovoltaic module and the like, and in order to ensure the overall state of the photovoltaic module before the subsequent weather resistance test, the double-check is performed. It should be noted that, in another exemplary embodiment of the present disclosure, after checking the output power of the photovoltaic module, an internal structure inspection may be performed on the photovoltaic module to sufficiently ensure the state of the photovoltaic module before the test. Further, this may provide a contrast reference for the status data of the module after the test.

In step S4, a climate environment is simulated, and an environmental weather resistance test is performed on the photovoltaic module.

After the aforementioned tests (or detections), the corresponding environment conditions are simulated according to the specific actual usage environment and usage conditions of the shared bikes. Since the environments in which the shared bikes are used in practice are relatively complex and diverse, the environmental weather resistance test described here may also be diversified according to different climates. The present disclosure provides the following three tests as examples: a humid-hot resistance test, a humid-freezing resistance test, and a heat cycle resistance test. When the environmental weather resistance test is performed, any one of the plurality of tests may be selected or a combination of the plurality of tests may be used according to actual requirements.

Specifically, in the humid-hot resistance test, the photovoltaic module is placed in an environment with an ambient temperature of 60° C to 70° C and a relative humidity of 80% to 90% for a first predetermined time. For example, the photovoltaic module is placed in an environment with an ambient temperature of 65 °C and a relative humidity of 85% for 300 hours. This condition is to simulate certain wet and hot environments in which the photovoltaic module used in shared bikes is placed, such as the weather in areas with intense sunshine and rain filling, and so on. The humid-freezing resistance test refers to placing the photovoltaic module in an environment with an ambient temperature of -30°C to 60°C and a relative humidity of 80% to 90% for a second predetermined time. It should be noted that in the humid-freezing resistance test, the temperature value may change within a preset temperature range (e.g., -30°C∼60°C) within the second predetermined time. For example, in a humid-freezing resistance test, firstly, the ambient temperature is set to be 60°C and the relative humidity is set to be 85%; and, within 24 hours, the ambient temperature is reduced to -30 °C and then increased to 60 °C according to a gradient, in order to simulate the wet and cold environments in which the photovoltaic module used in the shared bikes is placed, such as the weather in areas where have large humidity and diurnal temperature variation. The heat cycle resistance test refers to placing the photovoltaic module in an environment with an ambient temperature of -30°C to 60°C and changing the ambient temperature according to a predetermined test cycle so as to further simulate an extreme climate. The difference from the above-mentioned humid-freezing resistance test is that in the heat cycle resistance test, there is no need to set high humidity and the changes in ambient temperature also follow a change cycle, usually 4 to 6 hours. It can be seen that in heat cycle resistance test, the time duration under the same environment temperature is longer than that in the humid-freezing resistance test.

In step S5, according to the appearance inspection standard, an appearance defect inspection is performed on the photovoltaic module.

After the above environmental weather resistance test is finished, the appearance defect inspection needs to be performed on the photovoltaic module again. The appearance inspection standard may be the same as that before the test, for example, an appearance inspection specification. The purpose for this inspection is to re-examine whether the environmental weather resistance test impose an influence (e.g., defects which is not in comply with the specification due to environment factors) on the appearance of the photovoltaic module.

In step S6, the light attenuation rate of the photovoltaic module is tested, and when the light attenuation rate is smaller than the attenuation threshold, step S7 is performed.

Next, light attenuation rate test is further performed on the photovoltaic module. Those skilled in the art may understand that the light attenuation rate at this stage is caused by the environmental weather resistance test and the aging of the photovoltaic module. In actual operations, the evaluation criteria in this step and the radiation manner adopted in this step may be the same as those described in step S2, which will not be repeated here.

In step S7, the output power of the photovoltaic module is checked under the predetermined test condition.

For the photovoltaic module which meets the required output stability for shared bikes in step S6, check of the output power is performed once again. Similarly, as mentioned above, on the one hand, the check in the present disclosure is a double-check to further ensure that the photovoltaic module is free from failure; on the other hand, the data before and after the test is also compared to determine the influences of the climate and environmental conditions on the photovoltaic module. Descriptions regarding the test standards and further internal structure inspection may be found in the steps before the test and repeated descriptions are omitted. However, it should be pointed out that in actual operations, if the double-check is not used, the internal structure inspection on the photovoltaic module may also be implemented. That is, if steps S3 and S7 are not performed, the internal structure inspection may be performed before and after the environmental weather resistance test.

In step S8, till now, the testing of weather resistance for the photovoltaic module used in shared bikes is ended.

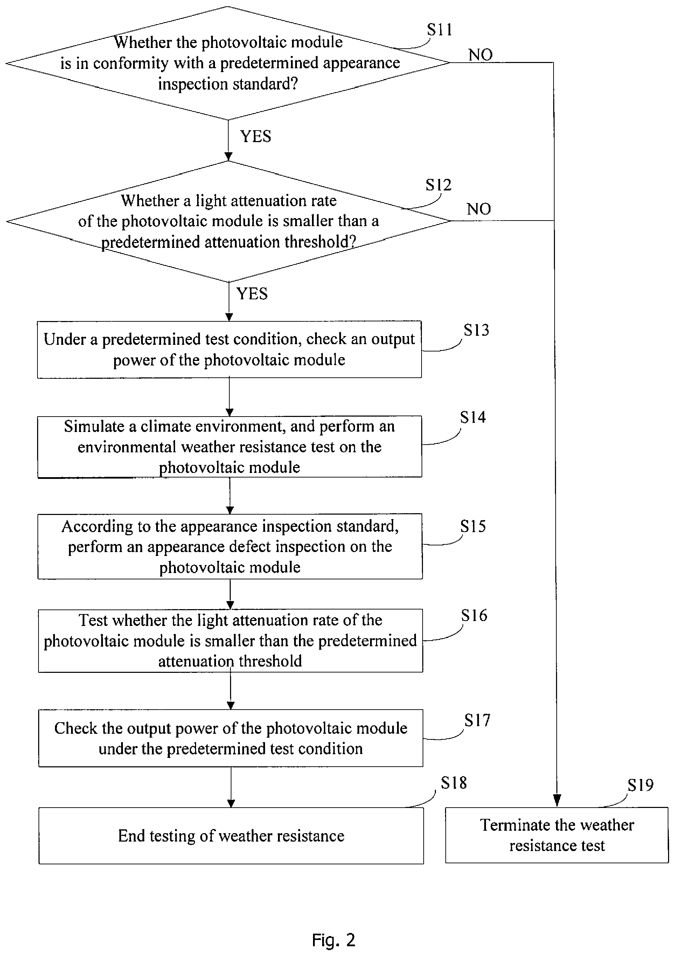

An embodiment of the present disclosure further provides a method for testing weather resistance of a photovoltaic module. As shown in Fig. 2, the method includes the following steps in sequence.

In step S11, whether the photovoltaic module is in conformity with a predetermined appearance inspection standard is detected (or determined).

First of all, before the weather resistance test, the module to be tested is visually inspected. The basis of the inspection criteria may be an appearance inspection specification customized for photovoltaic products for shared bikes. The purpose is to check whether the appearance of the photovoltaic module is obviously defective or there is any defect in the appearance of the photovoltaic module which goes beyond the appearance inspection specification. The photovoltaic module used in shared bikes described herein may include photovoltaic modules of types such as the crystalline silicon, thin film, and the like.

If it is detected in step S11 that the photovoltaic module is not in conformity with the predetermined appearance inspection standard, the flow proceeds to step S19, the weather resistance test is terminated, i.e., the weather resistance test is not continued, and the photovoltaic module may be determined as unqualified or nonconforming. If it is detected in step S11 that the photovoltaic module is in conformity with the predetermined appearance inspection standard, the flow proceeds to step S12.

In step S12, whether a light attenuation rate of the photovoltaic module is smaller than a predetermined attenuation threshold is determined.

In step S12, a light attenuation rate test of the photovoltaic module is performed. Since this step is before the weather resistance test, those skilled in the art may understand that this step is an initial light attenuation rate test which is performed to determine whether the photovoltaic module product meets the reliability as required in the shared bike application field. Thus, the attenuation threshold may be set to be a relatively small value, for example, 1%. That is, the subsequent steps may be performed only if the light attenuation rate is smaller than 1%. The so-called light attenuation refers to that the output power of the photovoltaic module experiences a significant decrease during the first few days of the first use. In actual operations, the light attenuation may be reduced by replacing the boron element with the gallium element, or pre-lighting may be performed on the photovoltaic module to control the initial light attenuation of the photovoltaic module within a very small range, thereby increasing the output stability of the photovoltaic module. Therefore, in an exemplary embodiment of the present disclosure, when performing the light attenuation rate test on the photovoltaic module, solar radiation may be simulated, and the photovoltaic module is continuously irradiated according to predetermined radiation energy and a predetermined number of times. The predetermined radiation energy may be 20Kwh, and the predetermined number of times may be at least twice.

If it is detected in step S12 that the light attenuation rate of the photovoltaic module is not smaller than the predetermined attenuation threshold, the flow proceeds to step S19, the weather resistance test is terminated, i.e., the weather resistance test is not continued, and the photovoltaic module may be determined as unqualified or nonconforming. If it is detected in step S12 that the light attenuation rate of the photovoltaic module is smaller than the predetermined attenuation threshold, the flow proceeds to step S13.

In step S13, under a predetermined test condition, an output power of the photovoltaic module is checked.

For a photovoltaic module that meets the output stability as required for a shared bike, the output power check is a double-check method proposed by the present disclosure. Here, the predetermined test condition refers to a power check according to any of the established standards, such as national standards, international standards or industrial standards. For example, the output power may be checked by referring to the STC test standard. The reason for the double-check is as follows: after the aforementioned light attenuation step, the output power of the photovoltaic module may be abnormal due to placing or carrying of the photovoltaic module and the like, and in order to ensure the overall state of the photovoltaic module before the subsequent weather resistance test, the double-check is performed. It should be noted that, in another exemplary embodiment of the present disclosure, after checking the output power of the photovoltaic module, an internal structure inspection may be performed on the photovoltaic module to ensure the state of the photovoltaic module before the test. Further, this may provide a contrast reference for the status data of the module after the test.

In step S14, a climate environment is simulated, and an environmental weather resistance test is performed on the photovoltaic module.

After the aforementioned tests (or detections), the corresponding environment conditions are simulated according to the specific actual usage environment and usage conditions of the shared bikes. Since the environments in which shared bikes are used in practice are relatively complex and diverse, the environmental weather resistance test described here may also be diversified according to different climates. The present disclosure provides the following three tests as examples: a humid-hot resistance test, a humid-freezing resistance test, and a heat cycle resistance test. When the environmental weather resistance test is performed, any one of the plurality of tests may be selected or a combination of the plurality of tests may be used according to actual requirements.

Specifically, in the humid-hot resistance test, the photovoltaic module is placed in an environment with an ambient temperature of 60° C to 70° C and a relative humidity of 80% to 90% for a first predetermined time. For example, the photovoltaic module is placed in an environment with an ambient temperature of 65 °C and a relative humidity of 85% for 300 hours. This condition is to simulate certain wet and hot environments in which the photovoltaic module used in shared bikes is placed, such as the weather in areas with intense sunshine and rain filling, and so on. The humid-freezing resistance test refers to placing the photovoltaic module in an environment with an ambient temperature of -30°C to 60°C and a relative humidity of 80% to 90% for a second predetermined time. It should be noted that in the humid-freezing resistance test, the temperature value is changed within a preset temperature range (e.g., -30'C∼60'C) within the second predetermined time. For example, in a humid-freezing resistance test, firstly, the ambient temperature is set to be 60°C and the relative humidity is set to be 85%; and, within 24 hours, the ambient temperature is reduced to -30 °C and then increased to 60 °C according to a gradient, in order to simulate the wet and cold environments in which the photovoltaic module used in shared bikes is placed, such as the weather in areas which have large humidity and diurnal temperature variation. The heat cycle resistance test refers to placing the photovoltaic module in an environment with an ambient temperature of -30°C to 60°C and changing the ambient temperature according to a predetermined test cycle so as to further simulate extreme climate. The difference from the above-mentioned humid-freezing resistance test is that in the heat cycle resistance test, there is no need to set high humidity and the changes in ambient temperature also follow a change cycle, usually 4 to 6 hours. It can be seen that in the heat cycle resistance test, the time duration under the same environment temperature is longer than that in the humid-freezing resistance test.

In step S15, according to the appearance inspection standard, an appearance defect inspection is performed on the photovoltaic module.

After the above environmental weather resistance test is finished, the appearance defect inspection needs to be performed on the photovoltaic module again. The appearance inspection standard may be the same as that before the test, for example, the appearance inspection specification. The purpose for this inspection is to re-examine whether the environmental weather resistance test impose an influence (e.g., defects which is not in comply with the specification due to environment factors) on the appearance of the photovoltaic module.

In step S16, whether the light attenuation rate of the photovoltaic module is smaller than the attenuation threshold is determined.

Next, light attenuation rate test is further performed on the photovoltaic module. Those skilled in the art may understand that the light attenuation rate at this stage is caused by the environmental weather resistance test and the aging of the photovoltaic module. In actual operations, the evaluation criteria in this step and the radiation manner adopted in this step may be the same as those described in step S12, which will not be repeated here.

**In** step S17, the output power of the photovoltaic module is checked under the predetermined test condition.

For the photovoltaic module, check of the output power is performed once again. Similarly, as mentioned above, on the one hand, the check in the present disclosure is a double-check to further ensure that the photovoltaic module is free from failure; on the other hand, the data before and after the test is also compared to determine the influences of the climate and environmental conditions on the photovoltaic module. Descriptions regarding the test standards and further internal structure inspection may be found in the steps before the test and repeated descriptions are omitted. However, it should be pointed out that in actual operations, if the double-check is not used, the internal structure inspection on the photovoltaic module may also be implemented. That is, if steps S13 and S17 are not performed, the internal structure inspection may be performed before and after the environmental weather resistance test.

In step S18, till now, the testing of weather resistance for the photovoltaic module used in shared bikes is ended. Further, changes in appearance and output power of the photovoltaic module before and after the weather resistance test may be output so as to obtain the weather resistance test results of the photovoltaic module, and it is also possible to make targeted improvements to the photovoltaic module.

Based on the above test flow, the present disclosure also accordingly provides a system for testing weather resistance of a photovoltaic module. The system includes: a module appearance inspection device configured to perform an appearance defect inspection on the photovoltaic module; a light attenuation rate test device configured to test a light attenuation rate of the photovoltaic module; a power check device configured to check an output power of the photovoltaic module; an environment simulation device configured to a climate environment; and a controller and a carrier unit.

The function of the controller is to control the carrier unit to carry the photovoltaic module to the above devices according to the sequence of the steps in the method for testing weather resistance of the photovoltaic module, so as to realize the procedure for testing weather resistance of a photovoltaic module used in a shared bike.

In specific operations, the types of the above devices are diverse. For example, the module appearance inspection device may be an image acquisition and analysis system, the light attenuation rate test device using light radiation may include a light absorption test chamber (LS/LID test chamber), the power check device may be a power tester (IV tester), the environment simulation device may be an environmental test chamber(which may be a device that tests the weather resistance and aging of solar modules by simulating the natural environment), the carrier unit may be a manipulator operating on a track or a carrier system consisting of a conveyor belt and an elevator support mechanism, and may be used for simulating vibration during transportation by vehicles, and the controller may be a programmable controller, a processor, an industrial computer and the like.

It should be further pointed out that if the test process includes the internal structure inspection on the photovoltaic module, an infrared imaging device such as an IR/NIR (Infrared/Near-Infrared) analyzer may also be included in the system for testing weather resistance. The IR/NIR analyzer performs internal structure analysis of solar modules using infrared imaging. Likewise, the controller controls the carrier unit to carry the photovoltaic module to the infrared imaging device in accordance with the above test procedure.

The structures, features, and effects of the present disclosure are described above in detail with reference to embodiments as shown in drawings. However, the above descriptions only show exemplary embodiments of the present disclosure. It should be noted that the technical features in the above exemplary embodiments can be reasonably combined into a plurality of equivalent solutions by a person skilled in the art without departing from or changing the design ideas and technical effects of the present disclosure. Therefore, the present disclosure is not limited to the embodiments shown in the drawings. Any changes following the concept of the present disclosure or equivalent modifications not exceeding the spirit covered by the specification and drawings are within the scope of the disclosure.

### Industrial Applicability

Shared Bike is a successful product of the sharing economies. With advantages such as convenience, environment friendliness and low prices, shared bikes have quickly been accepted by consumers.

The use of solar technology combined with shared bikes matches the economic and social values of bike-sharing services. On the one hand, the shared bikes are produced as an independent power generation entity to provide power guarantees for all kinds of power equipment on shared bikes through solar energy, thereby improving the efficiency in energy production, recycling, and sharing for shared bikes. On the other hand, shared bikes also promotes the rapid development of the green energy industry, which in turn protects the environment while also stimulating the upgrading and development of related industrial chains.

However, shared bikes using the solar technology are emerging industrial products. Currently, there is no corresponding failure analysis and related test procedures and standards for photovoltaic modules used in shared bikes.

Therefore, in order to test the influences of specific usage environment and climate factors on the performance and lifetime of the photovoltaic modules equipped on shared bikes, the present disclosure proposes a targeted method for testing weather resistance of a photovoltaic module to compensate for the inadequacies of related arts. The present disclosure can provide a weather resistance test idea for performance evaluation and outdoor usage of the photovoltaic module, which ultimately can improve the usage experience of users of shared bikes. Therefore, the present disclosure can timely support emerging economies and their industrial products.

## Claims

1. A method for testing weather resistance of a photovoltaic module, comprising sequential steps of:
according to a predetermined appearance inspection standard, performing an appearance defect inspection on the photovoltaic module (S1);
testing a light attenuation rate of the photovoltaic module (S2), and when the light attenuation rate is smaller than a predetermined attenuation threshold, performing, under a predetermined test condition, checking an output power of the photovoltaic module (S3);
simulating a climate environment, and performing an environmental weather resistance test on the photovoltaic module (S4);
according to the appearance inspection standard, performing an appearance defect inspection on the photovoltaic module (S5);
testing the light attenuation rate of the photovoltaic module (S6), and when the light attenuation rate is smaller than the attenuation threshold, performing, checking the output power of the photovoltaic module under the predetermined test condition (S7); and
ending testing of weather resistance (S8).

2. The method according to claim 1, wherein the environmental weather resistance test comprises any one or a combination of a humid-hot resistance test, a humid-freezing resistance test, and a heat cycle resistance test.

3. The method according to claim 2, wherein the humid-hot resistance test comprises:
placing the photovoltaic module in an environment with an ambient temperature of 60° C to 70° C and a relative humidity of 80% to 90% for a first predetermined time.

4. The method according to claim 2, wherein the humid-freezing resistance test comprises:
placing the photovoltaic module in an environment with an ambient temperature of -30°C to 60°C and a relative humidity of 80% to 90% for a second predetermined time.

5. The method according to claim 2, wherein the heat cycle resistance test comprises:
placing the photovoltaic module in an environment with an ambient temperature of -30°C to 60°C and changing the ambient temperature according to a predetermined test cycle.

6. The method according to any one of claims 1 to 5, wherein after checking the output power of the photovoltaic module, the method further comprises:
performing an internal structure inspection on the photovoltaic module.

7. The method according to any one of claims 1 to 5, wherein the testing the light attenuation rate of the photovoltaic module comprises:
simulating solar radiation, and allowing the photovoltaic module to continuously experience the simulated radiation according to a predetermined radiation energy and a predetermined number of times.

8. A system for testing weather resistance of a photovoltaic module, comprising a module appearance inspection device, a light attenuation rate test device, a power check device, an environment simulation device, a controller and a carrier unit;
wherein:
the module appearance inspection device is configured to perform an appearance defect inspection on the photovoltaic module;
the light attenuation rate test device is configured to test a light attenuation rate of the photovoltaic module;
the power check device is configured to check an output power of the photovoltaic module;
the environment simulation device is configured to simulate a climate environment;
the controller is configured to control the carrier unit to carry the photovoltaic module to the above devices according to the sequence of the steps in the method for testing weather resistance of the photovoltaic module according to any one of claims 1 to 5.

9. The system according to claim 8, further comprising: an infrared imaging device configured to perform an internal structure inspection on the photovoltaic module.

10. The system according to claim 8, wherein the light attenuation rate test device comprises a light absorption test chamber.
